Europäisches Patentamt

European Patent Office

Office européen des brevets

(19)

(11) Publication number: **0 455 901 A1**

(12) **EUROPEAN PATENT APPLICATION**

(21) Application number: 90305077.1

(51) Int. Cl.⁵: **F27D 3/02**, F27B 9/22

(22) Date of filing: **11.05.90**

(43) Date of publication of application:
**13.11.91 Bulletin 91/46**

(84) Designated Contracting States:
**AT BE CH DE DK ES FR GB GR IT LI LU NL SE**

(71) Applicant: **CERAMIC FIBREFORMS LIMITED**
**Rossmore Industrial Estate**
**Ellesmere Port, South Wirral(GB)**

(72) Inventor: **Jevons, Norman William**

1 Bellemonte Road
Frodsham, Cheshire(GB)
Inventor: **Tildsley, Michael**
7 Elmwood Drive
Heswall, Wirral(GB)

(74) Representative: **Huntingford, David Ian et al**
Geoffrey Owen & Company 76 Lower Bridge
Street
Chester CH1 1RU(GB)

(54) **Furnace insulation.**

(57) A heat insulation system for fluid carrying furnace pipes, wherein a plurality of pairs of shell parts (22a, 22b) are adapted to be fitted around a pipe to be insulated. The shell parts (22a, 22b) are fabricated from a vacuum formed ceramic fibre material and the two shell parts (22a, 22b) in each pair are connected together mechanically by a coupling means (36) which enables each of the shell parts to be releasable individually from an operational position on the pipe.

*Fig. 1.*

*Fig. 3.*

2

The present invention is concerned with furnace insulation and in particular with insulation of the skid rail systems used in 'walking beam' and 'pusher' type furnaces.

'Walking beam' or 'Pusher' type furnaces are found principally in steel hot rolling mills, although they are to be found in other industries also. In a furnace in which steel, or other materials (hereinafter referred to as "products") are to be reheated prior to rolling or other treatments, it is usually essential that the heat is applied as uniformly as possible to the metal or material products during its travel through the furnace prior to rolling or other treating. To achieve this effect, the steel billets or other materials are simultaneously heated from a number of points whilst supported on pipes which are located approximately halfway up the vertical height of the furnace and run its whole length.

These supporting pipes are known as 'Skid Pipes' or beams and attached to the tops of these in order to support the steel are a plurality of pieces of tough, heat-resistant metal which are known as 'Skid Rails'. The skid pipes are themselves supported horizontally by vertical pipes of a similar diameter which are known as 'uprights' or 'stand pipes'. In order to prevent the skid pipes and stand pipes from softening when the furnace is heated, they are cooled by a continuous internal flow of water. External insulation applied around these pipes prevents the cooling water from boiling and reduces energy consumption.

Skid pipes, which are usually either of circular or triangular section, are traditionally insulated by encapsulating them either in a dense refractory medium or ceramic fibre blanket medium. A number of proprietary designs are on the market by which such encapsulation is achieved but all suffer from the same disadvantages as described below.

All of the existing insulation designs require the use of anchoring devices actually fixed to the pipes themselves. The most usual technique involves the welding of metal sprags onto the upper halves of the pipes. The dense refractory medium is applied in prefabricated form and is hung around the pipes so as to engage over the upstanding sprags or has its cast-in metal pieces welded either directly onto the pipes or onto sprags welded into the pipes. In the case of ceramic fibre blanket systems, the flexible blanket is impaled onto sprags welded onto the pipes. There are a number of capping systems (high temperature) which fit over the protruding sprags to protect them and to further act as a blanket retention system. This technique has the following associated disadvantages in practice:

(a) The dense refractory mediums used are inherently thermally inefficient;

(b) The dense refractory medium needs to be quite thick and can produce heat shadow between the produots and the burners, thereby resulting in longer firing time to produce an even temperature in the products or in lack of uniformity in the products;

(c) The metal sprags need to be welded to the skid pipes so that two skilled installers are needed, i.e. a welder to fit the sprags, and a bricklayer to place the refractory. Synchronising trades can be a problem, it is a time-consuming process and therefore installation is expensive;

(d) When damaged in service, for instance by a short billet of steel knocking against it, the dense refractory insulation tends to fall off in large pieces so that the insulation system fails completely;

(e) In the case of walking beam furnaces, where alternate pipes are reciprocated vertically and longitudinally in a cyclic motion by a cam mechanism, debris from a failure such as mentioned in (d) above, can damage the cam mechanism driving the pipe systems and in severe cases could necessitate a total shut down.

It is an object of the present invention to provide a new insulation system which avoids, or substantially mitigates, the disadvantages of the known, dense refractory systems and by virtue of its ease of installation, substantially reduces both installation and repair costs.

In accordance with the present invention, there is provided a heat insulation system for fluid carrying furnace pipes, the system comprising a plurality of pairs of shell parts adapted to be fitted around a pipe to be insulated, the two shell parts in each pair being connected together mechanically by a coupling means which enables each of the shell parts to be releasable individually from an operational position on the pipe.

Preferably, each shell part carries a respective removable metal rod embedded therein, the coupling means being attachable to the two metal rods of the two shell parts to acheive said connection.

Preferably, the two shell parts are fabricated from a vacuum formed ceramic fibre material.

Preferably, the two shell parts are generally semi-circular in transverse section and of internal diameter dimensioned to fit around the periphery of the pipe, the metal rods being received in respective bores extending within the material of the shell parts, parallel to the longitudinal axis thereof.

In the case that the fluid carrying pipe is a horizontally extending skid pipe of a walking beam or pusher type furnace and has a plurality of skid rails aligned longitudinally along its uppermost region, the two shell parts preferably have a generally C-shaped sectional configuration and are adapted to be fitted around the pipe to define a substantially annular sleeve, with the upper facing edges of the two shell parts engaging respective side faces of the skid rails and the lower facing edges of the two shell parts in mutual abutment.

Advantageously, the respective bores in the two shell parts, which receive the metal rods, are disposed adjacent to, and run substantially the whole length of, said upper facing edges.

Preferably, the two shell parts contain recesses intermediate their length, by which the metal rods are exposed from the shell material, the coupling means being attached to the rods in said exposed regions.

Advantageously, the coupling means comprises a pair of tie means, each of which has a first aperture or hook which receives a respective one of the metal rods and a second aperture which receives a common link bar.

In one embodiment, the link bar is screw-threaded and carries a pair of nuts for selectively retaining the second apertures of the two tie means on the link bar, whereby either of the shell parts can be selectively released from the pipe by removal of the appropriate nut.

The invention is described further hereinafter, by way of example only, with reference to the accompanying drawings, in which:

Fig.1 is a perspective view of part of a walking beam type furnace incorporating an insulation system in accordance with the present invention;

Fig.2 is a cross-section through one of the skid pipes of the apparatus of Fig.1, showing the means of attachment of the insulation thereto;

Fig.3 is a partially exploded view of part of one of the skid pipes of the apparatus of Fig.1;

Fig.4 is a perspective view, illustrating the means of attachment of the insulation used in the illustrated embodiment;

Fig.5 is a perspective view of an insulation piece which can be used in the apparatus of the invention; and

Fig.6 is a perspective view of insulation members used to form an insulation T-piece.

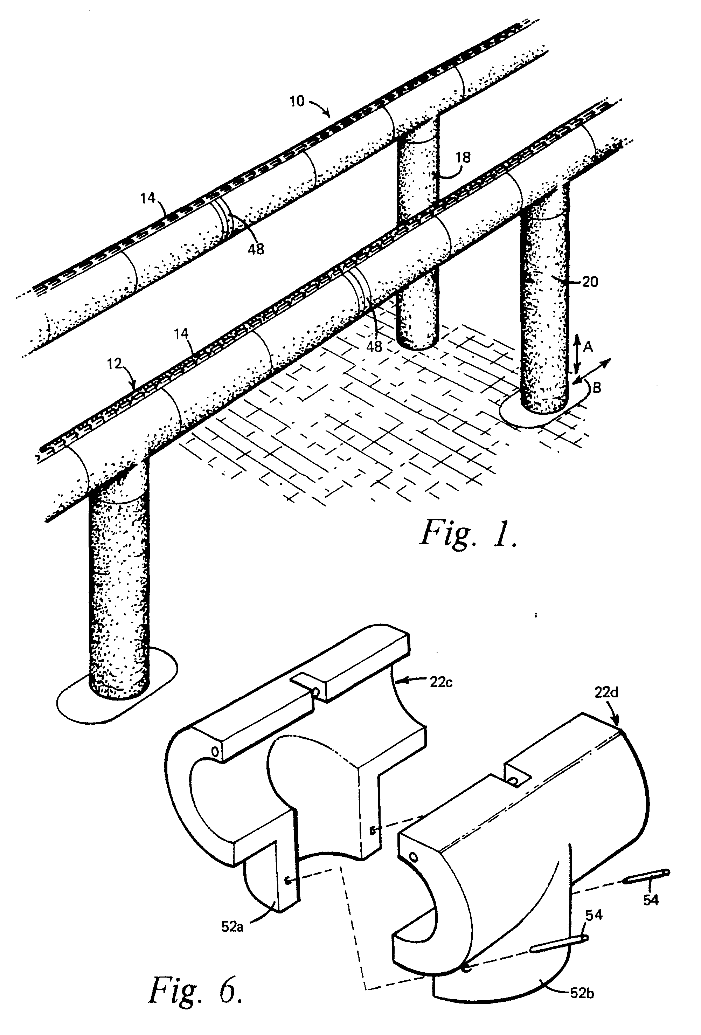

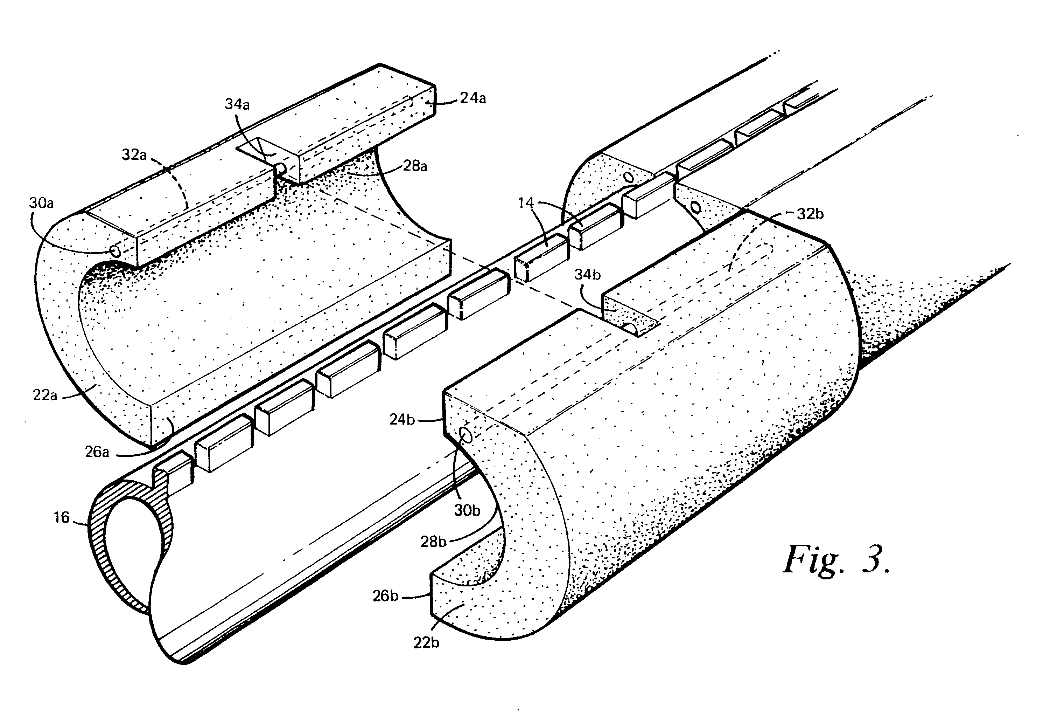

Referring firstly to Fig.1, there is shown part of a walking beam type furnace to which the invention is applied. In a conventional manner the furnace includes a plurality of pairs of parallel skid pipes 10,12, only one pipe of each pair being shown, carrying skid rails 14. As best seen in the cut-away view of Fig.3, the skid pipes 10 comprise hollow metal tubes 16 to the tops of which the skid rails 14 are welded in lines parallel to the respective pipe axes. Adjacent skid rails 14 are separated by a substantially uniform gap, typically of the order of 2.5 - 5.0 cms.

In the conventional manner for walking beam type furnaces, each pipe 10 is fixed and therefore does not move in operation of the furnace. On the other hand, the pipes 12 are arranged to be displaced in a manner such as to advance billets along the furnace. For this purpose, the pipes 12 are supported on a cam-type mechanism (not shown) below hearth level which displaces the pipes 12 upwardly, forwardly, downwardly and backwardly in a cyclic manner to achieve forward displacement of the billets along the other, fixed pipes 10. As indicated in Fig.1, the pipes 10,12 are disposed alternately so that each two adjacent fixed pipes 10 has a movable pipe 12 disposed therebetween. In a typical case, there are six pipes 10 and five pipes 12 arranged in an array along the furnace.

The upper sides of the skid rails 14 define a discontinuous planar surface on which the billets can slide.

The horizontal skid pipes 10,12 are supported by respective pluralities of vertical stand pipes or uprights 18,20. The stand pipes 18 are fixed rigidly relative to the furnace hearth but the stand pipes 20 are coupled to the cam mechanism (not shown) for achieving the above-described motion of the rails 14, as indicated in Fig.1 by arrows A and B.

In operation of the furnace, cooling water is passed continuously through the pipes 10,12,18,20 to prevent these pipes from being overheated by the furnace burners. In order to prevent the cooling water in the pipes from boiling, it is necessary for these pipes to be encased in a heat insulation medium, except for the upper regions of the skid rails which must, of course, be exposed to define the skid rail surface for the billets.

As explained hereinbefore, it has been the conventional practice for this insulation to take the form of a dense refractory or blanket medium which is keyed on to the pipes by the use of metal sprags or anchors welded to the pipes. Instead of such mediums, the present invention makes use of a system of insulation components made of a very light vacuum cast/formed ceramic fibre which are mounted to the pipes in a manner so that they can be easily mounted/removed without disturbing the insulation system as a whole.

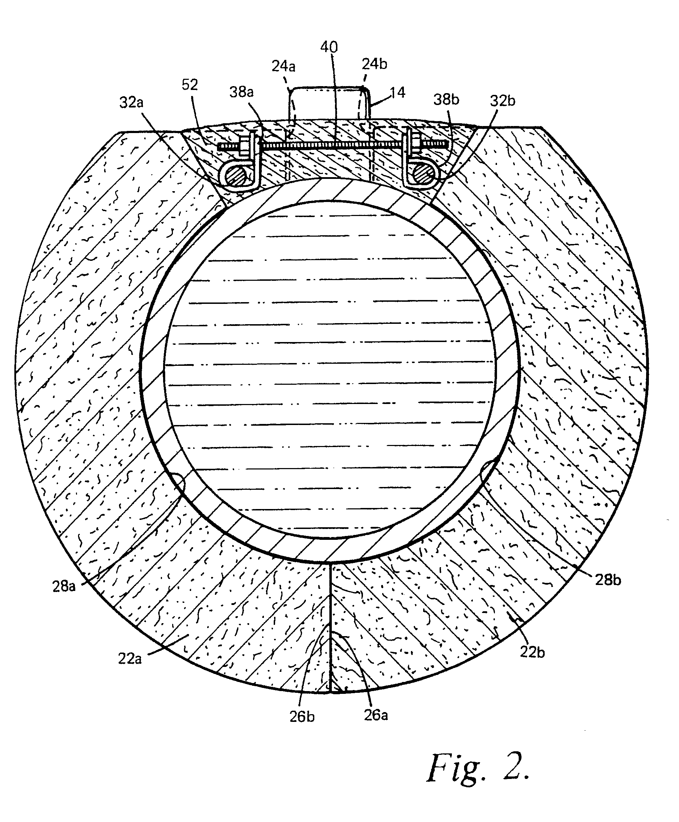

Referring now to Figs. 2 and 3, the insulation system includes a plurality of pairs of mating shells 22a,22b made of the vacuum cast/formed ceramic fibre material. Each shell part 22a,22b is of slightly less than semi-circular section so that when butted together around the pipe 10,12, with the skid rails 14 therebetween, they form a substantially continuous sleeve of generally annular configuration, which is cut back somewhat at the top so that the skid rails can project upwardly above the insulation, as best seen in Fig.2.

In detail, each shell part 22a,22b has a pair of front surfaces 24a,24b; 26a,26b separated by an arcuate surface 28a,28b, shaped to fit snugly around the outer periphery of the associated pipe 10,12. When the two shell parts of each pair are presented to the pipe 10,12, the lower front surfaces 26a,26b of these shell parts are in direct mutual abutment (see Fig.2). The upper front surfaces 24a,24b on the other hand, engage against the respective vertical side surfaces of the skid rails 14 and so are separated by these rails. The means by which the shell parts are held in this operational position will now be described.

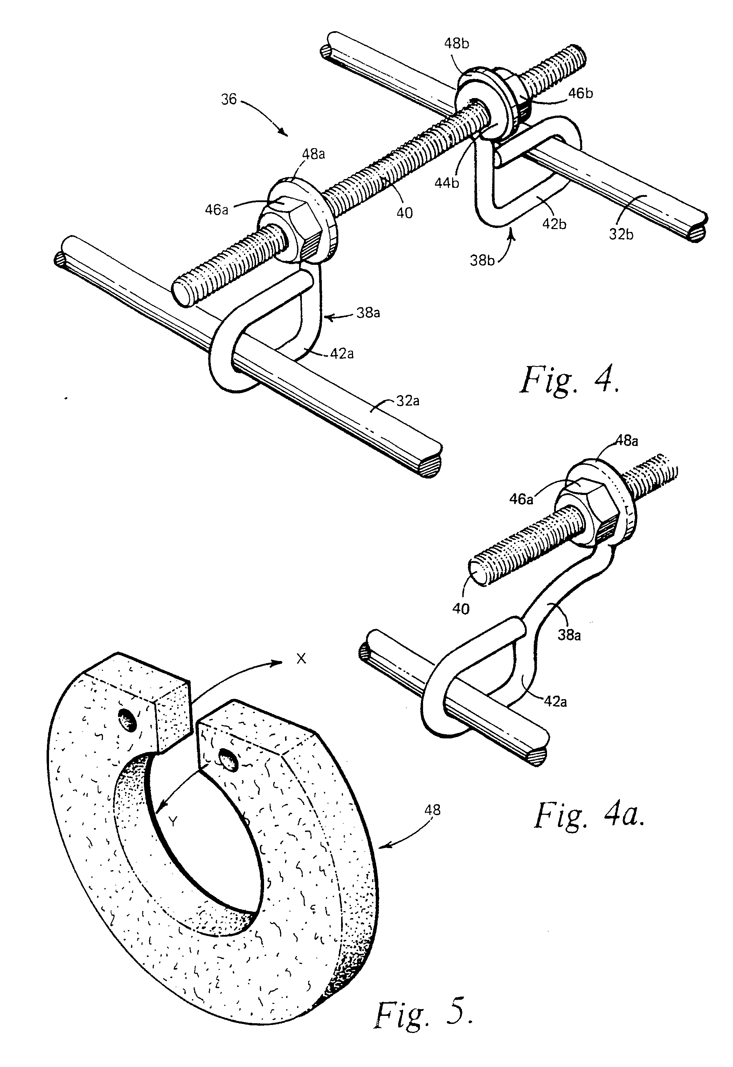

Each shell part 22a,22b is provided with a longitudinally extending through-hole 30a,30b in its upper region adjacent to the respective vertical front surface 24a,24b. Inserted into each through-hole 30a,30b is a respective metal rod 32a,32b, preferably of steel, which is dimensioned so as to occupy substantially the whole length of the associated hole 30. Substantially midway along the length of each shell part, and opposite to a selected one of the gaps between two adjacent ones of the skid rails 14, there is formed (usually during installation) a recess 34a,34b by virtue of which a portion of each of the metal rods 32a,32b is exposed. The two exposed portions of each pair of rods 32a,32b are arranged to be coupled together mechanically by an anchoring or coupling mechanism 36 shown separately in Fig.4 and shown in situ in Fig.2.

The coupling mechanism 36 comprises a pair of ties 38a,38b connected respectively to the two metal rods 32a,32b at their exposed regions and interconnected by an adjustable link 40. In this particular embodiment, the ties 38a,38b each comprise a length of metal rod/wire having a first loop 42a,42b which is arranged to receive the respective rod 32a,32b and a second loop 44a (not visible in Fig.4) 44b which receives the common adjustable link 40. The link 40 comprises a screw-threaded metal rod. Respective nuts 46a,46b and washers 48a,48b are disposed outboard of the second loops 44a,44b to enable the two ties to be drawn together and selectively released from the link 40 for the purpose described further hereinafter.

The operational steps for attaching the shell parts to the pipes 10,12 are now described.

Normally, the recesses 34a,34b are formed on site to enable their position to be selected to suit the position of the chosen gap between two adjacent skid rails 14. The fibre-based material of the shells is relatively soft so that the recesses 34 can easily be dug out to expose the rods 32a,32b, using a suitable tool, such as a knife, saw blade, screw-driver or wood-chisel. The rods 32a,32b are then inserted longitudinally into the holes 30a,30b, with the respective loops 42a,42b of the ties 38a,38b being disposed over the rods 32 within the respective recesses 34a,34b. The link rod 40 is then introduced between the two loops 44a,44b to couple together the two rods 32a,32b (and thereby the two shell parts 22a,22b. Preferably, a high temperature adhesive is applied to the arcuate surfaces 28a,28b of the shells, and possibly also to the surfaces 24a,24b and 26a,26b, and the two shell parts are then offered up to the relevant pipe 10,12. The adhesive can be any suitable high-temperature adhesive, such as those sold under the trade names Thermofix or Stellafast. The shells are positioned on the pipe so that the link 40 lies between, and spaced from the two selected adjacent skid rails 14 and the nuts are screwed onto the link 40 so as to urge the faces 24a,24b of the shell parts against the adjacent side walls of the skid rails 14. Since the curves of the arcuate faces 28a,28b match the outer periphery of the pipe 10,12, the lower faces 26a,26b automatically lie in mutual abutment. With the shell parts so fitted, a semi-fluid mastic 52 is inserted into the aligned recesses 34a,34b so as to envelope the exposed parts of the metal rods 32a,32b and the whole of the coupling mechanism 36. Mastic is also inserted into all other gaps between the skid rails. The upper surface of the mastic can be substantially flush with, or slightly raised above, the surrounding surfaces of the shell parts (see Fig.2).

The mastic must obviously be capable of withstanding furnace temperatures without degradation and, for this purpose, is preferably ceramic fibre based.

As shown in Fig.1, a plurality of pairs of shell parts 22a,22b are applied in this manner along the length of the pipes 10,12 so as to cover these pipes completely. Any exposed parts remaining can be covered using further mastic or using additional insulation pieces such as shown in Fig.5. The insulation piece 48 shown in Fig.5 is formed as a single component of generally C-shaped configuration, the spacing between the ends of which corresponds to the width of the skid rails 14. The component 48 is made of essentially the same random fibre matrix as the shell parts 22 but is arranged to be much more flexible by suitable alteration of the chemical binders, used to bind the ceramic fibres. This component 48 can also be made of proprietary blanket. Whereas, the shell parts 22 are intended to be relatively unflexible, and therefore use a binder which is, for example silica- based, the component uses a binder such as a latex-based binder which provides flexibility. The component 48 can thereby be applied over a pipe 10,12 by deforming it in the direction X, Y in Fig.5 to open up the arms.

Although the above description refers solely to the horizontal pipes 10,12, similar shell parts 22 are also applied around the vertical stand pipes 24 in exactly the same manner. However, in the case of

releasable individually from an operational position on the pipe.

2. A heat insulation system according to claim 1, in which each shell part (22a, 22b) carries a respective metal rod (32a, 32b) embedded therein, the coupling means (36) being attachable to the two metal rods of the two shell parts to achieve said connection.

3. A heat insulation system according to claim 2, in which the two shell parts (22a, 22b) are of internal transverse profile to fit intimately around the periphery of the pipe, the metal rods (32a, 32b) being received in respective bores (30a, 30b) extending within the material of the shell parts, parallel to the longitudinal axis thereof.

4. A heat insulation system according to claim 3, in which the furnace pipe is a horizontally extending skid pipe (10, 12) of a walking beam or pusher type furnace and has a plurality of skid rails (14) aligned longitudinally along its uppermost region, the two shell parts (22a, 22b) having a generally C-shaped sectional configuration and being adapted to be fitted around the pipe to define a substantially annular sleeve, with the upper facing edges (24a, 24b) of the two shell parts engaging respective side faces or edges of the skid rails (14) and the lower facing edges (26a, 26b) of the two shell parts in mutual abutment.

5. A heat insulation system according to claim 4, in which the respective bores (30a, 30b) in the two shell parts, which receive the metal rods (32a, 32b) are disposed adjacent to, and run substantially the whole length of, said upper facing edges (24a, 24b).

6. A heat insulation system according to claim 4 or 5, in which the two shell parts (22a, 22b) contain recesses (34a, 34b) intermediate their length, by which the metal rods (32a, 32b) are exposed from the shell material, the coupling means (36) being attached to the rods (32a, 32b) in said exposed regions.

7. A heat insulation system according to any of claims 2 to 6, in which the coupling means comprises a pair of tie means (38a, 38b), each of which has a first aperture or hook (42a, 42b) which receives a respective one of the metal rods (32a, 32b) and a second aperture (44a, 44b) which receives a common link bar (40).

8. A heat insulation system according to claim 7, in which the link bar (40) is screw-threaded and carries one or a pair of nuts (46a, 46b) for selectively retaining the second apertures (44a, 44b) of the two tie means on the link bar, whereby either of the shell parts (22a, 22b) can be selectively released from the pipe.

9. A heat insulation system according to claim 6, 7 (when appendant to claim 6) or 8, in which, in the assembled state, the recesses are filled with a heat resistant mastic (52) which encases said exposed regions of the metal rods (32a, 32b) and the whole of said coupling means (36).

10. A heat insulation system according to claim 9 in which the gaps between adjacent skid rails (14) are also filled with the mastic (52).

11. A heat insulation system according to any of claims 1 to 10, in which the shell parts are fabricated from a vacuum formed ceramic fibre material.

12. A heat insulation system as claimed in any of claims 1 to 11, in which a high temperature adhesive is arranged between the internal peripheries of the shell parts and the pipe around which they are fitted.

13. A heat insulation system as claimed in any of claims 1 to 12, in which a substantially annular gasket is fitted around the pipe between two sets of adjacent pairs of shell parts.

*Fig. 1.*

*Fig. 6.*

*Fig. 2.*

Fig. 3.

EP 0 455 901 A1

*Fig. 4.*

*Fig. 4a.*

*Fig. 5.*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 125 753 (CAMERON IRON WORKS) * Claims; figures * | 1 | F 27 D 3/02 F 27 B 9/22 |
| X | * Page 4, line 10, figures * | 9 | |
| X | US-A-4 312 385 (MAGERA) * Claims; figures * | 1 | |
| A | FR-A-2 192 694 (URQUHART ENG.) * Page 8, lines 17-28; figure 6; claims * | 2,3,4,5,6 | |
| A | GB-A- 11 380 (W.I. SUTCLIFFE) * Claims; figures * | 7,8 | |
| A | DE-B-1 243 224 (VEREINIGTE ÖSTERREICHISCHE EISEN- UND STAHLWERKE AG) * The whole document * | 1,2,3 | |
| A | FR-A-2 619 615 (DIDIER-WERKE AG) * Claims; figure 3 * | 9,11 | TECHNICAL FIELDS SEARCHED (Int. Cl.5) |
| A | FR-A-2 353 032 (J. MANVILLE CORP.) * Claims; figures * | 12 | F 27 B F 27 D |

The present search report has been drawn up for all claims

| Place of search | Date of completion of the search | Examiner |
|---|---|---|
| THE HAGUE | 18-07-1990 | COULOMB J.C. |